# EUROPÄISCHE PATENTANMELDUNG

(11) **EP 0 901 911 A2**
(43) Veröffentlichungstag der Anmeldung: **17.03.1999**
(21) Anmeldenummer: 98116164.9
(22) Anmeldetag: 27.08.1998
(51) Int. Cl.: B60B 31/02

(54) **Zentriermaschine zum Nachspannen und Zentrieren von eingespeichten Laufrädern**

(30) Priorität: 09.09.1997 DE 19739336
(71) Anmelder: Golz, Günter, 33449 Langenberg (DE)
(72) Erfinder: Golz, Günter, 33449 Langenberg (DE)
(74) Vertreter: Patentanwälte Rehberg + Hüppe

(57) **Zusammenfassung**

Eine Zentriermaschine zu Nachspannen und Zentrieren von eingespeichten Laufrädern ist mit Schienen zur Führung des Laufrades, mit Anschlägen zum Positionieren der Achse (2) des Laufrades (1), mit je einer Spanneinrichtung (20, 20') rechts und links des Laufrades (1) zur Aufnahme der Achse (2) des Laufrades (1), mit an der Felge (6) angreifenden Antriebsrollen (23, 23') zum Drehen des Laufrades (1) um seine gespannte Achse (2), und mit mindestens einem reversibel angetriebenen Nippelspanner (26) ausgestattet. Die beiden Spanneinrichtungen (20, 20') sind auf einem in Richtung einer Idealachse (8) verschieblich gelagerten Rahmen (7) angeordnet und auf diesem gemeinsamen Rahmen (7) symmetrisch zu einer Idealebene (9) senkrecht zu der Idealachse (8) in Richtung der Idealachse (8) gegenläufig verfahrbar. Zur Ermittlung des Verschiebeweges des Rahmens (7) relativ zu der Idealebene ist eine Wegmeßeinrichtung (10) vorgesehen. Der Nippelspanner (26) ist radial zur Idealachse (8) verfahrbar und mit einer Einrichtung (33) zum Erkennen der Laufradseite ausgestattet.

## Beschreibung

Die Erfindung betrifft eine Zentriermaschine zu Nachspannen und Zentrieren von eingespeichten Laufrädern, mit schienen zur Führung des Laufrades, mit Anschlägen zum Positionieren der Achse des Laufrades, mit je einer Spanneinrichtung rechts und links des Laufrades zur Aufnahme der Achse des Laufrades, mit an der Felge angreifenden Antriebsrollen zum Drehen des Laufrades um seine gespannte Achse, und mit mindestens einem reversibel angetriebenen Nippelspanner. Solche Zentriermaschinen werden eingesetzt, um bereits eingespeichte Laufräder, bei denen also die Felge über Speichen und Nippel mit der entsprechenden Habe verbunden und mehr oder weniger gespannt sind, nachzuspannen. Dabei wird die vorgesehene Endspannung erreicht, und die Nippel auf den Speichen werden so angezogen bzw. gelöst, daß Seitenschlage und/oder Höhenschläge der Felge an dem Laufrad beseitigt bzw. auf eine hinnehmbare Toleranz reduziert werden.

Eine Zentriermaschine der eingangs beschriebenen Art ist bekannt. Das Laufrad bestimmt eine Ebene, die in der Zentriermaschine als vertikale Längsmittelebene ausgebildet ist und die im Idealzustand des gespannten Laufrades, also ohne jeglichen Seitenschlag, die sogenannte Idealebene bildet. Senkrecht auf dieser Idealebene steht die Idealachse, also die Achse, in der sich die Achse der Nabe des Laufrades im Idealzustand befindet, wenn jeglicher Höhenschlag vermieden bzw. hinwegverstellt ist. Die bekannte Zentriermaschine weist rechts und links des Laufrades je eine separate Spanneinrichtung auf. Jede Spanneinrichtung ist in der Idealachse verfahrbar und wird in Richtung auf die Idealebene von einer Feder, in Gegenrichtung dagegen von einem Luftzylinder angetrieben. Durch Einwirkung der Kräfte der beiden Federn bewegen sich die beiden Spanneinrichtungen mehr oder weniger gleichzeitig in die Spannposition, in der die Achse des Laufrades in jeder Spanneinrichtung aufgenommen und festgespannt wird. Die beiden Spanneinrichtungen sind dann über die Achse des Laufrades untereinander verbunden. Das Laufrad selbst befindet sich mehr oder Weniger weit von der Idealebene entfernt. An dieser Zentriermaschine sind Einlaufschienen und Auslaufschienen für das Laufrad vorgesehen, so daß jedes Laufrad mit vertikal geführter Laufradebene in die Zentriermaschine einläuft, dort behandelt wird und aus dieser wieder ausläuft. Die Schienen sind höhenverstellbar vorgesehen und können von Hand verstellt bzw. eingestellt werden. Nach der spannenden Aufnahme der Achse durch die beiden Spannvorrichtungen wird die Einlaufschiene abgesenkt, und das Rad hängt frei an seiner Achse. Es werden zwei Antriebsrollen zum Einsatz gebracht, die rechts und links der Felge angreifen und das Rad um die festgespannte Achse drehen. Der relative Abstand der Spannvorrichtungen zu den Arbeitsrollen muß manuell eingestellt werden. Es sind auch zwei Nippelspanner vorgesehen, die einerseits auf Lochabstand und andererseits auf die entsprechende Schräglage der Speichen eingestellt werden müssen. Auch dies geschieht von Hand und ist mühsam, weil verschiedene Spannpunkte nacheinander betätigt werden müssen. Alle oben beschriebenen Elemente dieser Zentriermaschine müssen von Hand mechanisch eingestellt werden, und zwar relativ zueinander. Dabei tritt die Schwierigkeit auf, daß sich mit dem Verstellen eines Elementes zwangsweise auch andere Elemente wieder mitverstellen, so daß das Einjustieren dieser Zentriermaschine auf einen bestimmten Laufradtyp langwierig und mühevoll ist. Für die Justierung der Zentriermaschine auf ein akzeptables Arbeitsergebnis ist die Justage durch einen Fachmann unerläßlich. Nachteilig an dieser bekannten Zentriermaschine ist, daß beim Zentrieren eines Seitenschlages zwangsweise ein Höhenschlag produziert wird. Die eingesetzten Nippelspanner können nur beschränkte Wege Zurücklegen, so daß es nicht möglich ist, beispielsweise Laufräder mit relativ großem Lochabstand der Speichen zu spannen. Die Antriebsrollen für das Drehen des Laufrades sind oberhalb der Idealachse angeordnet, und zwar an einer Stelle, an der auch die beiden Nippelspanner vorgesehen sind. Oft stören sich diese beiden Elemente in ihrer gegenseitigen Arbeitsweise. Durch die freie Beweglichkeit der linken Spanneinrichtung relativ zur rechten Spanneinrichtung wird ein Bündel von Ebenen festgelegt, die mehr oder weniger entfernt von der Idealebene des Laufrades sind, wobei diese Entfernung von der Idealebene nicht erkennbar ist.

Auch die EP 0 476 749 A1 zeigt eine Zentriermaschine mit zwei unabhängig voneinander in Achsrichtung verschiebbaren Spanneinrichtungen, die über ein gewichtsbelastetes Seil, welches über Umlenkrollen geführt ist, miteinander verbunden sind. Jede der Spanneinrichtungen ist in Achsrichtung separat verschiebbar gelagert. Über das die beiden Spanneinrichtungen verbindende Seil wird eine Meßeinrichtung für einen Seitenschlag angetrieben. Die Felge des eingespeichten Rades wird über zwei Antriebsrollen angetrieben, die ortsfest gelagert sind. Die Vorrichtung besitzt zwei Nippelspanner, die motorisch angetrieben sind. Jeder Nippelspanner besitzt eine Nuß zum Angriff an dem betreffenden Nippel. Zur Anpassung an die Schräglage der Speichen ist der Arm jedes Nippelspanners über mehrere Luftzylinder in seiner Schräglage verstellbar. Die Zentriermaschine weist ein zentrales Steuergerät auf, welches mit Spannungsmeßeinrichtungen für die auf die Speichen aufgebrachte Spannung versehen ist. Über diese Meßeinrichtungen wird auch der Antrieb der Nippelspanner betätigt. Weiterhin sind Meßeinrichtungen für den Abstand der Speichen voneinander vorgesehen. Auch bei dieser Zentriermaschine muß eine Vielzahl von Elementen von Hand eingestellt werden. Auch dies ist mühevoll und zeitaufwendig.

Der Erfindung liegt die Aufgabe zugrunde, eine Zentriermaschine der eingangs beschriebenen Art zu schaffen, mit der es möglich ist, das Laufrad in einer Idealebene aufzunehmen, deren Relativlage zu den Antriebsrollen festliegt und ermittelt werden kann, um insoweit eindeutige Verhältnisse für die Messung eines Seitenschlages zu bekommen. Die Zentriermaschine soll so ausgebildet sein, daß sie ohne jede nennenswerte manuelle Einstellung auskommt, sich also gleichsam automatisch über entsprechende Steuervorgaben auf den jeweiligen Laufradtyp einstellt.

Erfindungsgemäß wird dies bei einer Zentriermaschine der eingangs beschriebenen Art dadurch erreicht, daß die beiden Spanneinrichtungen auf einem in Richtung einer Idealachse verschieblich gelagerten Rahmen angeordnet und auf diesem gemeinsamen Rahmen symmetrisch zu einer Idealebene senkrecht zu der Idealachse in Richtung der Idealachse gegenläufig verfahrbar sind, daß zur Ermittlung des Verschiebeweges des Rahmens relativ zu der Idealebene eine Wegmeßeinrichtung vorgesehen ist, und daß der Nippelspanner radial zur Idealachse verfahrbar und mit einer Einrichtung zum Erkennen der Laufradseite ausgestattet ist.

Die Erfindung geht von dem Gedanken aus, die beiden Spanneinrichtungen rechts und links des Laufrades auf einem festen, das Laufrad überbrückenden Rahmen miteinander zu verbinden und gegenläufig an dem Rahmen derart zu bewegen, daß die Idealebene des Laufrades an dem Rahmen ein für alle Mal unverrückbar festliegt. Der Rahmen ist in Richtung der Idealachse verschieblich gelagert. Über eine Wegmeßeinrichtung kann das Auswandern des Rahmens aus der Idealebene festgestellt werden. Der von dieser Wegmeßeinrichtung ermittelte Weg ist ein Maß für einen Seitenschlag, nämlich relativ zu den angetriebenen Antriebsrollen, die ihrerseits symmetrisch zu der festliegenden Idealebene an der Zentriermaschine vorgesehen sind. Dieser von der Wegmeßeinrichtung aufgenommene Weg gestattet es, mit Hilfe der Nippelspanner hinwegverstellt zu werden, so daß das Laufrad bzw. dessen Achse und Nabe durch entsprechende Verdrehung der Nippel in die Idealebene zurückgeführt wird. In der Regel werden zwei Nippelspanner eingesetzt, wobei die beiden Nippelspanner symmetrisch zu einer Vertikalebene durch die Idealachse zum Einsatz kommen. Es ist aber auch möglich, die Maschine mit nur einem Nippelspanner auszurüsten oder nur einen der Nippelspanner für das Zentrieren und Nachspannen einzusetzen. In diesem Falle ist es sinnvoll, diesen Nippelspanner in der Vertikalebene wirkend zum Einsatz zu bringen. Da mit dem oder den Nippelspannern die Nippel auf den beiden Seiten des Laufrades gedreht werden müssen, ist zumindest einer der Nippelspanner mit einer Einrichtung zum Erkennen der Laufradseite ausgestattet. Über diese Einrichtung wird die Drehrichtung des Nippelspanners gesteuert. Es versteht sich, daß bei der Beseitigung eines Seitenschlages die Nippel unterschiedlicher Laufradseiten in einander entgegengesetztem Drehsinn betätigt werden müssen. Bei der Beseitigung eines Höhenschlages müssen dagegen die Nippel unterschiedlicher Laufradseiten in gleichem Drehsinn angezogen oder gelöst werden. Die Einrichtung zum Erkennen der Laufradseite bestimmt die jeweilige Drehrichtung des jeweiligen Nippels abhängig davon, ob ein Seitenschlag oder ein Höhenschlag beseitigt werden soll.

Das Zentrieren und Nachspannen eines eingespeichten Laufrades in der neuen Zentriermaschine läuft wie folgt ab: Bei eingestellter Maschine läuft ein Laufrad über Schienen zur Führung des Laufrades in die Zentriermaschine ein, wobei es an Anschlägen zum Positionieren der Achse des Laufrades aufläuft, und zwar derart, daß sich die Laufradachse in der Idealachse befindet. Mit den beiden Spanneinrichtungen, die symmetrisch zu der Idealebene in Richtung der Idealachse gegenläufig verschoben werden, wird das Laufrad mit seiner Achse in der Idealachse und mit seiner Ebene in der Idealebene festgespannt. Sobald diese Einspannung der Achse des Laufrades erfolgt ist, werden die Anschläge von dem Laufrad entfernt, beispielsweise hinweggeschwenkt, und die Antriebsrollen symmetrisch zur Idealebene an die Felge angelegt, wobei die Felge symmetrisch zur Idealebene zwischen den Antriebsrollen eingeklemmt wird. Wenn die Felge an dieser Stelle keinen Seitenschlag besitzt, verschiebt sich auch der Rahmen mit der Spanneinrichtung gegenüber dem Gestell der Zentriermaschine nicht. Wenn dagegen ein Seitenschlag vorhanden ist, wird der Rahmen um den Weg des Seitenschlages relativ zum Gestell der Maschine verschoben. Dieser Verschiebeweg wird durch die Meßeinrichtung gemessen, und stellt damit das Maß für den Seitenschlag an der betreffenden Stelle der Felge des Laufrades dar. Über eine zentrale Steuereinheit werden die Nippelspanner derart betätigt, daß die Achse des Laufrades in der Idealachse so verschoben wird, daß die aktuelle Laufradebene in die Idealebene zurückgeführt wird. Die Drehrichtung an jedem angesetzten Nippelspanner wird durch die Einrichtung zum Erkennen der Laufradseite vorgegeben bzw. bestimmt. Nach einer oder mehreren Arbeitsumdrehungen sind die Seitenschläge auf die jeweilige akzeptable Toleranz zurückgeführt, so daß sich die Laufradebene in der Idealebene befindet. Bei der Messung eines Höhenschlages findet eine entsprechende Meßeinrichtung Verwendung. Auch hier wird die Drehrichtung der Mittelspanner von der zentralen Steuereinheit gesteuert. Wenn zwei Nippelspanner gleichzeitig zum Einsatz kommen, werden beide Nippelspanner mit übereinstimmender Drehrichtung betätigt.

Insbesondere kann rechts und links des Laufrades je ein Nippelspanner vorgesehen sein, die beide um die Idealachse schwenkbar aufgehängt und gemeinsam gegenläufig relativ zu einer durch die Idealachse festgelegten Vertikalebene verfahrbar sind. Die schwenkbare Aufhängung der Nippelspanner um die Idealachse ist insofern sinnvoll, weil damit die Drehachse der Nuß des Nippelspanners in einer Richtung automatisch mit der Richtung der jeweiligen Speiche übereinstimmt. Auch eine Verstellung der Nippelspanner relativ zueinander, beispielsweise zum Erreichen eines anderen Lochabstandes, ändert hieran nichts.

Jeder Nippelspanner weist eine Spannuß mit frei schwenkbarer Drehachse zum Ausgleich unterschiedlicher Schräglagen der Speichen zur Idealebene auf. Damit können Toleranzen in der Schräglage der Speichen an einem Laufrad zueinander eingestellt werden. Es ist auch möglich, nur einen Nippelspanner einzusetzen, wobei dieser abwechselnd die Nippel der beiden Laufradseiten betätigt und sich infolge seiner frei schwenkbaren Drehachse jeweils verläßlich auf die jeweilige Schräglage einstellt. Damit wird eine große Betriebssicherheit erreicht.

Für die Einstellung der Schienen zur Führung des Laufrades und/oder der Anschläge zum Positionieren der Achse des Laufrades und/oder der an der Felge angreifenden Antriebsrollen zum Drehen des Laufrades und/oder des oder der reversibel angetriebenen Nippelspanner sind jeweils elektrische, elektromechanische und/oder pneumatische Mittel vorgesehen. Weiterhin ist eine gemeinsame elektronische Steuereinrichtung für die Einstellung der genannten Elemente und deren Arbeitsablauf in Abhängigkeit von dem Typ und insbesondere der Größe des jeweiligen Laufrades vorgesehen. Die gemeinsame elektronische Steuereinrichtung ist so ausgebildet und eingerichtet, daß sie die elektrischen, elektromechanischen und/oder pneumatischen Mittel abhängig von dem jeweiligen Laufradtyp einstellt und auch deren Arbeitsabfolge steuert. Insoweit kann die Steuereinrichtung einen Speicher aufweisen, in dem die betreffenden Daten für die Einstellung der Mittel und der typischen Größen des Laufrades typweise abgelegt sind. Die Mittel sind so angeordnet aufgehängt und betrieben, daß sich jeweils eine reproduzierbare Relativlage der einzelnen zu verstellenden Elemente ergibt, also jegliche Justage von Hand entfällt. Wenn alle der genannten Mittel maschinell ver- und einstellbar sind, ergibt sich eine vollautomatisch arbeitende Zentriermaschine, wobei zur Justage der einzelnen Elemente nur noch die betreffenden Laufradgrößen eingegeben werden müssen.

Es ist ein höhenveränderlicher Arbeitstisch vorgesehen, an dem eine untere Einlaufschiene für das Laufrad höhenverstellbar endet und der die beiden Antriebsrollen für die Felge des Laufrades tragt. Die beiden Antriebsrollen sind über miteinander im Eingriff stehende Zahnräder symmetrisch zur Idealebene verstellbar, so daß jede Felge, gleich welcher Breite, automatisch mit ihrer Mittelebene in die Idealebene gebracht wird, so daß der Verschiebeweg der Achse den Seitenschlag wiedergibt. Die untere Einlaufschiene fungiert hier als einer der beiden Anschläge für das Laufrad. Die untere Einlaufschiene ist relativ zum Arbeitstisch höhenverstellbar, während die beiden Antriebsrollen an dem Arbeitstisch sitzen und über dessen Höhenverstellung auf den entsprechenden Abstand zu der Idealachse eingestellt werden.

An dem Arbeitstisch kann eine Einrichtung zur Messung eines Höhenschlages des Laufrades in Richtung auf die Idealachse verfahrbar vorgesehen sein. Diese Einrichtung zur Messung des Höhenschlages ist nun ihrerseits wiederum höhenveränderlich gegenüber dem Arbeitstisch und kann in eine Parkposition bzw. eine Arbeitsposition verfahren werden. In der Arbeitsposition gibt die Einrichtung kontinuierlich ein den jeweiligen Höhenschlag betreffendes Maß bzw. Signal ab, welches der zentralen Steuereinrichtung zugeführt wird, über die die Nippelspanner gesteuert werden. Die Nippelspanner werden gleichläufig gesteuert, und zwar bezüglich beider Laufradseiten.

Die Einlaufschiene weist einen ebenen Boden auf. Im Gegensatz zum Stand der Technik, bei dem die Einlaufschiene einen umgekehrt dachförmig ausgebildeten Boden besitzt, ermöglicht es ein ebener Boden, auch bei unterschiedlichen Felgenbreiten und übereinstimmenden Radien des Laufrades gleiche Höhenpositionen einzunehmen. Dies vereinfacht die Einstellung und erhöht die Betriebssicherheit.

An der Zentriermaschine sind zwei Anschläge zum Positionieren der Achse des Laufrades vorgesehen, die um etwa 90° versetzt zu der Idealachse angeordnet und gemeinsam gleichläufig in ihrem Abstand von der Idealachse verfahrbar sowie aus der Anschlagstellung in eine jeweilige Parkstellung und umgekehrt beweglich sind. Der eine Anschlag ist damit gleichsam unterhalb des Laufrades vorgesehen. Er wird von dem Ende einer Einlaufschiene gebildet, die im Endbereich einen um eine horizontale Achse verschwenkbaren Abschnitt besitzt. Damit kann dieser Anschlag weggeschwenkt werden, sobald das betreffende Laufrad mit seiner Achse gespannt ist. Der andere Anschlag ist um etwa 90° bezüglich der Idealachse versetzt angeordnet und befindet sich in Einlaufrichtung des Laufrades nach vorn versetzt, so daß damit, wenn beide Anschläge einwirken, die Lage der Achse des Laufrades festgelegt ist und sich in der Idealachse befindet, so daß die Spanneinrichtungen zum Einsatz kommen können. Bei den Spanneinrichtungen handelt es sich um solche, die nur in Richtung der Idealachse verfahrbar sind. Jede Spanneinrichtung besitzt ein Spannfutter, welches über Federn beaufschlagte Backen besitzt, die selbsttätig die Spannstellung einnehmen, sobald sie gegen die Nabe gefahren werden.

Es sind obere und untere Einlaufschienen für das Laufrad vorgesehen, die über einen Antrieb in der Höhe gegenläufig verstellbar sind. Ein gemeinsamer Antrieb bewirkt, daß die Einlaufschienen - und ggf. auch die Auslaufschienen - gegenläufig eingestellt werden, und zwar im wesentlichen in Abhängigkeit von dem Laufraddurchmesser. Auch diese Bewegung wird durch die gemeinsame elektronische Steuereinrichtung gesteuert, so daß auch hier eine Justage von Hand entfällt.

In einer besonderen Ausführungsform weist der gemeinsame Rahmen für die Spanneinrichtungen eine sich parallel zu der Idealachse erstreckende von einem Motor getriebene Antriebswelle auf, wobei die beiden Spanneinrichtungen über Gewindespindeln mit gegenläufigen Gewinden in Richtung der Idealachse angetrieben sind. Damit wird die Laufradebene verläßlich in die Idealebene an dem Rahmen gebracht, so daß eindeutige reproduzierbare Ausgangsbedingungen gegeben sind. Der gemeinsame Rahmen stellt ein stabiles Element dar, welches mit hoher Genauigkeit arbeitet, so daß die Laufräder unter reproduzierbarer Einhaltung relativ enger Toleranzen nachgespannt und zentriert werden können.

Die Erfindung wird anhand schematischer Darstellungen weiter erläutert und beschrieben. Es zeigen:
- Fig. 1: eine Ansicht der Spanneinrichtung der Zentriermaschine,
- Fig. 2: eine Ansicht des Arbeitstisches und eines Nippelspanners im unteren Bereich der Zentriermaschine,
- Fig. 3: eine Seitenansicht des Einlaufbereiches der Zentriermaschine und
- Fig. 4: eine schematisierte Zusammenstellungszeichnung der wesentlichen Elemente der Zentriermaschine.

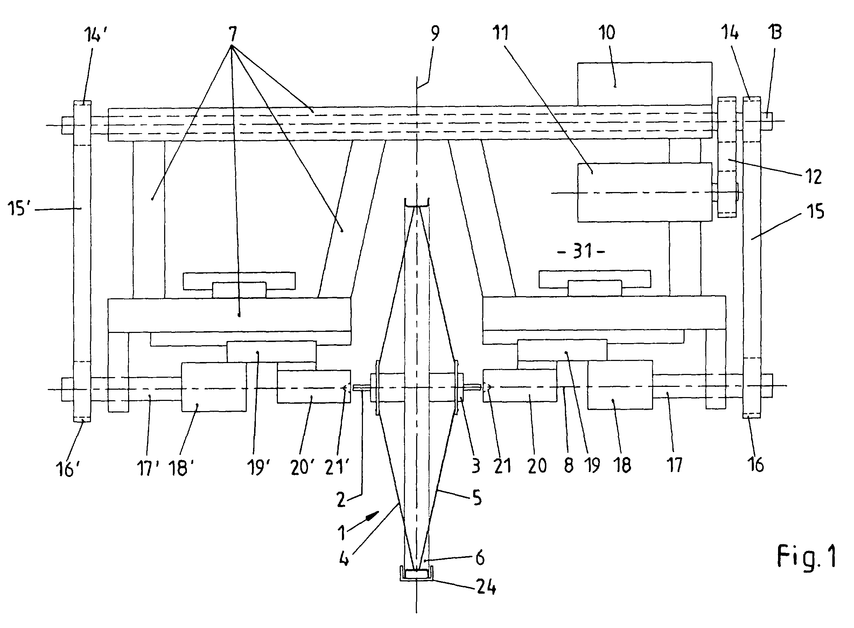

In Fig. 1 ist der obere Teil der Zentriermaschine dargestellt. Es ist ein in die Maschine eingelaufenes Laufrad 1 mit seiner Achse 2, der Nabe 3, den Speichen 4 und 5 sowie der Felge 6 erkennbar. Das Laufrad 1 ist jochartig von einem starren Rahmen 7 umgeben, der einerseits eine Idealachse 8 und senkrecht dazu mittig eine Idealebene 9 festlegt. Die Idealachse 8 liegt in der Zeichenebene der Fig. 1. Die Idealebene 9 steht senkrecht zu der zeichenebene durch die Idealachse 8. Der Rahmen 7 ist seinerseits gegenüber einem maschinenfesten Standrahmen (nicht dargestellt) in Richtung der Idealachse 8 verschiebbar gelagert. Eine Wegmeßeinrichtung 10, die am Standrahmen befestigt ist, dient der Erzeugung eines Wegsignals entsprechend dem Verschiebeweg, um den der Rahmen 7 in Richtung der Idealachse 8 verschoben wird. An dem Rahmen 7 sitzt ein Motor 11, der über einen Treibriemen 12 oder eine Getriebestufe eine Antriebswelle 13 antreibt, die den Rahmen 7 im oberen Bereich durchsetzt und symmetrisch zu der Idealebene 9 vorgesehen und im Rahmen 7 gelagert ist. Auf der rechten Seite sitzt auf der Antriebswelle 13 ein Treibrad 14, über welches ein Riemen 15 geschlungen ist, der auch über ein Treibrad 16 geschlungen ist, der drehfest mit einer Gewindestange 17 verbunden ist, die in eine Gewindemutter 18 eingreift. Die Gewindemutter 18 ist mit einem Schlitten 19 verbunden, der sich am Rahmen 7 parallel zur Richtung der Idealachse 8 führt. Mit dem Schlitten 19 ist eine Spanneinrichtung 20 lösbar verbunden, die an ihrem der Achse 2 des Laufrades zugekehrtem Ende ein mechanisch auslösbares Spannfutter 21 trägt. Auf der linken Seite der Idealebene 9 sind die entsprechenden Elemente vorgesehen und jeweils durch einmal gestrichene Bezugszeichen angeordnet. Wichtig ist nur zu erkennen, daß die Gewindestangen 17 und 17' und die Gewindemuttern 18 und 18' gegenläufige Gewinde aufweisen, so daß je nach Drehrichtung des Motors 11 die Spanneinrichtungen 20 und 20' sich immer symmetrisch zu der Idealebene 9 bewegen, also in der einen Richtung auf das Laufrad 1 zufahren, während bei umgekehrter Drehrichtung des Motors sich die Spanneinrichtungen 20 und 20' voneinander entfernen. Es versteht sich, daß diese symmetrische gegenläufige Bewegung der Spanneinrichtungen 20 und 20' zueinander auch in anderer Weise realisiert werden könnte, beispielsweise durch Getriebestufen, wobei über eine Drehrichtungsumkehr in einer der Getriebestufen die gegenläufige Bewegung erzeugt werden könnte. Die Spannfutter 21 und 21' sind nun so ausgebildet, daß sie beim Auflaufen auf die Stirnflächen der Nabe 3 die Achse 2 festspannen, so daß die Achse 2 des Laufrades 1 sich dann in der Idealachse 8 befindet und in dieser festgehalten wird.

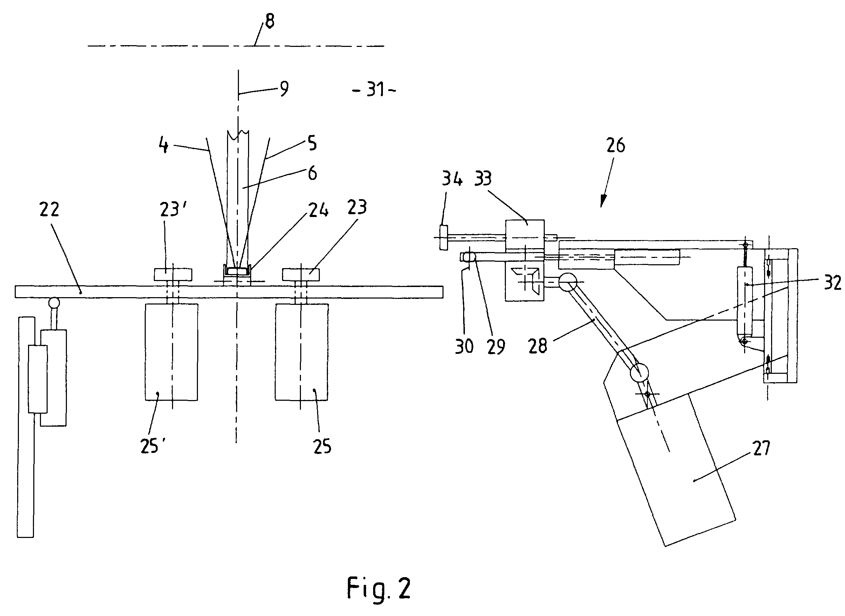

Fig. 2 läßt einen Arbeitstisch 22 erkennen, auf dem zwei Antriebsrollen 23 und 23' gegenläufig schwenkbar zur Idealebene 9 gelagert sind. Jede Antriebsrolle 23 bzw. 23' ist mit einem Motor 25 bzw. 25' versehen, so daß die Antriebsrollen 23 und 23' in umgekehrter Drehrichtung angetrieben werden. Zwischen den Antriebsrollen 23 und 23' wird die Felge 6 eingeklemmt, und zwar an dieser Stelle genau in der Idealebene 9, so daß dann das in den Spanneinrichtungen 20 und 21 eingespannte Laufrad über die Antriebsrollen 23 und 23' gedreht werden kann. Der Arbeitstisch 22 mit den darauf sitzenden Antriebsrollen 23 und 23' ist höhenverstellbar vorgesehen, um unterschiedlichen Laufraddurchmessern Rechnung zu tragen. Das Laufrad 1 läuft über eine Einlaufschiene 24 in die Maschine ein. Die Einlaufbewegung wird über Anschläge so beendet, daß die Achse 2 des Laufrades sich etwa in der Idealachse 8 befindet, damit die Spanneinrichtungen 20 und 20' richtig zum Einsatz kommen können. Anschließend wird die Einlaufschiene 24 am Arbeitstisch 22 abgesenkt, damit sich das Laufrad 1 mit seiner Felge 6 frei in der gespannten Achse 2 drehen kann. Erst anschließend werden die Antriebsrollen 23 und 23' an die Felge 6 herangeschwenkt. Sofern die Felge 6 einen Seitenschlag besitzt, führt dies dazu, daß durch die Anlage der Antriebsrollen 23 und 23' in der Idealebene 9 die Achse 2 und mit diesem der gesamte Rahmen 7 in Richtung der Idealachse 8 verschoben wird. Dieser Verschiebeweg wird durch die Wegmeßeinrichtung 10 festgestellt. Das Maß dieses Verschiebeweges entspricht dem Maß des Seitenschlages der Felge 6 an dieser Stelle. Beim Drehen der Felge mittels der angetriebenen Antriebsrollen 23 und 23' bewegt sich der Rahmen 7 in Richtung der Idealachse 8 und zeigt damit an jeder Stelle den betreffenden Seitenschlag an, falls dieser vorhanden ist.

Auf der einen Seite der Idealebene 9 ist ein Nippelspanner 26 angeordnet. Auf der anderen Seite der Idealebene 9 kann ein weiterer Nippelspanner 26' (nicht dargestellt) angeordnet sein. Beide Nippelspanner 26 und 26' sind weitgehend identisch ausgebildet. Sie sind beide um die Idealachse 8 maschinenseitig schwenkbar gelagert, besitzen einen Motor 27, der eine Gelenkwelle 28 antreibt, deren Drehbewegung letztlich über einen Getriebezug in eine Spannuß 29 übertragen wird, die zur Verdrehung der Nippel auf den Speichen 4 bzw. 5 dient. Die Spannuß 29 besitzt eine in einem bestimmten Winkelbereich frei schwenkbare Drehachse 30, so daß sie ihre Schräglage automatisch der Schräglage der Speiche 4 bzw. 5 anpassen kann.

Wenn nur ein Nippelspanner 26 Verwendung findet, dann ist dieser in einer Vertikalebene 31 durch die Idealachse 8 angeordnet. Diese Vertikalebene 31 bildet die Zeichenebene in Fig. 2. Wenn zwei Nippelspanner 26 und 26' rechts und links der Idealebene 9 angewendet werden, also zwei Nippel immer gleichzeitig gedreht werden, werden die Nippelspanner 26 und 26' symmetrisch gegenläufig zu der Vertikalebene 31 eingestellt, und zwar auf Nippelabstand. Die Nippelspanner 26 bzw. 26' mit ihrer Spannuß 29 bzw. 29' sind in die dargestellte Parkstellung verfahrbar, die immer dann eingenommen wird, wenn das Laufrad 1 um die Achse 2 gedreht werden soll. Andererseits sind die Nippelspanner 26 und 26' auch in Richtung auf die Idealebene 9 verfahrbar, bis ihre jeweilige Spannuß 29 bzw. 29' an der betreffenden Speiche 5 bzw. 4 anschlägt. Die Nippelspanner 26 bzw. 26' sind mit ihrer jeweiligen Spannuß 29 bzw. 29' in Richtung der betreffenden Speiche verfahrbar bzw. verschwenkbar, bis die betreffende Spannuß auf dem betreffenden Nippel aufgesetzt hat und greift. Die Nippelspanner 26 und 26' können in ihrer Relativlage auf die Schräglage der betreffenden Speiche 4 bzw. 5 voreingestellt werden. Hierzu dienen verschiedene Mittel, beispielsweise ein Zylinder 32. Die frei bewegliche Drehachse 30 der betreffenden Spannuß 29 dient dann nur noch zum Ausgleich von Schräglagentoleranzen der Speichen 4 bzw. 5. Es muß mindestens ein Nippelspanner 26 vorgesehen sein, der mit einer Einrichtung 33 zum Erkennen der jeweiligen Laufradseite ausgestattet ist. Diese Einrichtung 33 weist einen Fühler 34 auf, der sich gegen die betreffende Speiche 5 oder 4 legt, wobei er relativ zur Spannuß 29 unterschiedliche Wege zurücklegt. Auf diesem Wege ist für den betreffenden Nippelspanner erkennbar, ob er einen Nippel der Speiche 5 oder der Speiche 4 zu verdrehen hat. Mit dieser Einrichtung 33 wird die Drehrichtung der beiden Motore 27 und 27' zueinander gesteuert. Wenn ein Seitenschlag beseitigt werden soll, werden benachbarte Nippel an Speichen 4 und 5 in unterschiedlichen Drehrichtungen betätigt. Beim Beseitigen eines Höhenschlages werden dagegen die Motore 27 und 27' in gleicher Drehrichtung betätigt.

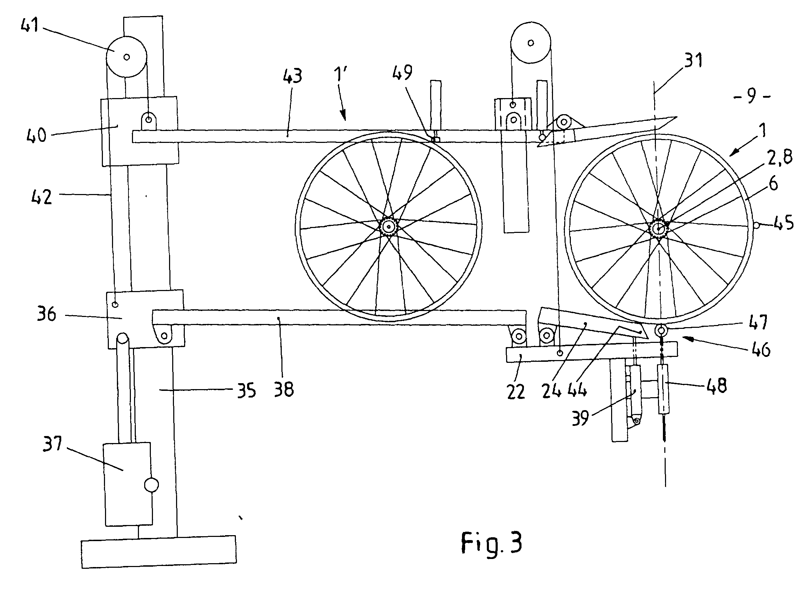

Fig. 3 zeigt eine Seitenansicht der Zentriermaschine und insbesondere ein Schienensystem am Einlauf. Der Rahmen 7 ist aus Übersichtlichkeitsgründen weggelassen. Der Einlauf der Laufräder 1 geschieht über ein Schienensystem. An einer Säule 35 ist ein Schlitten 36 höhenveränderlich geführt. Für die Veränderung der Höhe des Schlittens 36 ist ein Motor 37 vorgesehen. Es ist eine Unterschiene 38 mit U-förmigem Querschnitt und horizontal ausgerichtetem Boden vorgesehen, deren eines Ende gelenkig an den Schlitten 36 und deren anderes Ende gelenkig an den höhenverfahrbaren Arbeitstisch 22 angelenkt ist. Die Unterschiene 38 findet ihre Fortsetzung in der Einlaufschiene 24, die gleichen Querschnitt aufweist und deren der Vertikalebene 31 zugekehrtes Ende über einen Zylinder 39 anhebbar bzw. absenkbar ist. Es ist hier die abgesenkte Stellung dargestellt, in der die Felge 6 von der Einlaufschiene 24 freigekommen ist und insoweit an einer Drehung nicht gehindert ist. Auf der Säule 35 ist ein weiterer Schlitten 40 höhenveränderlich geführt, der über ein um eine Umlenkrolle 41 geführtes Seil 42 mit dem Schlitten 36 verbunden ist. Da der Motor 37 an der Säule 35 gelagert ist, ist erkennbar, daß die beiden Schlitten 36 und 40 bei Betätigung des Motors 37 eine gegenläufige Bewegung durchführen. Mit dem Schlitten 40 ist eine Oberschiene 43 gelenkig verbunden, die sich in Richtung auf die Vertikalebene 31 erstreckt und dort nochmals höhenveränderlich geführt ist. Die Oberschiene 43 kann auch aus zwei nebeneinander befindlichen Stangen bestehen. Auch eine nochmalige Unterteilung der Oberschiene 43, wie dargestellt, ist möglich. Es wird somit erkennbar, daß über den Motor 37 die Relativentfernung der Unterschiene 38 und der Oberschiene 43 auf die jeweilige Laufradgröße, also den Durchmesser des Laufrades 1, einstellbar ist.

Beim Einlaufen eines Laufrades 1 in die Spannposition des in der Vertikalebene 31 angeordneten Rahmens 7 ist die Einlaufschiene 24 über den Zylinder 39 angehoben. Sie bildet mit dem Boden ihres vorderen Endes einen Anschlag 44, der die Höhe der Achse 2 des Laufrades 1 relativ zu den Spanneinrichtungen 20 und 20' festlegt. Es ist ein weiterer Anschlag 45 vorgesehen, der sich etwa auf der Höhe der Achse 2 vor dem Laufrad 1 befindet. Die beiden Anschläge 44 und 45 legen damit gegenseitig die Lage der Achse 2 relativ zu den Spanneinrichtungen 20 und 20' fest. Der Anschlag 45 ist wegschwenkbar gelagert, damit er in der weggeschwenkten Stellung weder das Drehen des Laufrades 1 mit festgespannter Achse 2 noch das Auslaufen des Laufrades 1 nach erfolgter Zentrierung behindert. Die beiden Anschläge 44 und 45 sind mechanisch miteinander verbunden. Sie sind im gleichen Radius zu der Idealachse 8 vorgesehen und werden gemeinsam auf die jeweilige Laufradgröße eingestellt.

Im Bereich des Arbeitstisches 22, etwa im Anschluß an das vordere Ende der Einlaufschiene 24, ist etwa in der Vertikalebene 31 eine Einrichtung 46 zur Messung eines Höhenschlages des Laufrades 1 vorgesehen. Die Einrichtung 46 weist einen Fühler 47 auf, der über einen Zylinder 48 in eine Park- bzw. in eine Arbeitsstellung (dargestellt) anhebbar ist. Hierzu kann die Kolbenstange des Zylinders 48 in dem Arbeitstisch 22 geführt sein. Es versteht sich, daß auch auf der Auslaufseite der Maschine ein Schienensystem für die Abfuhr der fertig bearbeiteten Laufräder vorgesehen ist. Am Arbeitstisch 22 sind weiterhin die Antriebsrollen 23 und 23' (Fig. 2) rechts und links der Idealebene 9 angeordnet und gegenläufig symmetrisch schwenkbar vorgesehen. Aus Übersichtlichkeitsgründen sind diese Antriebsrollen 23 und 23' in Fig. 3 nicht dargestellt. Die Oberschiene 43 ist mit einem aushebbaren Anschlag 49 versehen, an dem sich nachfolgende Laufräder 1' aufstauen, wenn sich ein vorangehendes Laufrad 1 in der Zentriermaschine in Bearbeitung befindet.

Es ist leicht vorstellbar, daß so die Laufräder nacheinander in die Maschine einlaufen. Fig. 3 zeigt den Zustand, in welchem das Laufrad 1 mit seiner Achse 2 eingelaufen und vermittels der Anschläge 44 und 45 so positioniert ist, daß die Spanneinrichtungen 20 und 20' die Achse 2 des Laufrades 1 in der Idealachse 8 gespannt haben. Der Anschlag 44 ist nach dem Spannen bereits weggeschwenkt. Der Anschlag 45 wird ebenfalls weggeschwenkt (nicht dargestellt). Das Laufrad 1 wurde dann hinsichtlich eines Seitenschlages zentriert. In einem zweiten Arbeitszyklus wird hinsichtlich eines Höhenschlages zentriert. Diesen Augenblick zeigt die Fig. 3. Der Fühler 47 der Einrichtung 46 ist angehoben, so daß er Kontakt zu der Felge 6 erhält. Die Felge 6 wird über die Antriebsrollen 23 und 23' in Drehung versetzt. Der Fühler 47 ist als Wegmeßeinrichtung ausgebildet und gibt als Signal die Wegänderungen der Felge 6 in Richtung eines Höhenschlages ab. Die Steuerung kann im einzelnen so erfolgen, daß das Laufrad 1 zunächst mit einer vollen Umdrehung angetrieben wird, wobei die Höhenschläge festgestellt, gespeichert und ein Mittelwert gebildet wird, der nun wieder bestimmend dafür ist, an welchen Speichen die Nippel über die Nippelspanner 26 und 26' in welchen Richtungen gedreht werden. Sodann ist das Laufrad 1 sowohl hinsichtlich des Seitenschlages wie auch des Höhenschlages zentriert und nachgespannt. Es wird von den Spanneinrichtungen 20 und 20' freigegeben und läuft aus der Zentriermaschine aus. Von dieser Bewegung wird ein Signal abgenommen, um den Anschlag 49 kurzzeitig zurückzuziehen, damit das erste aufgestaute Laufrad 1' sich in Bewegung setzt und in die Maschine einläuft, so daß an diesem Laufrad 1' der Zyklus der Zentrierung der Seitenschläge und nachfolgend der Höhenschläge ablaufen kann.

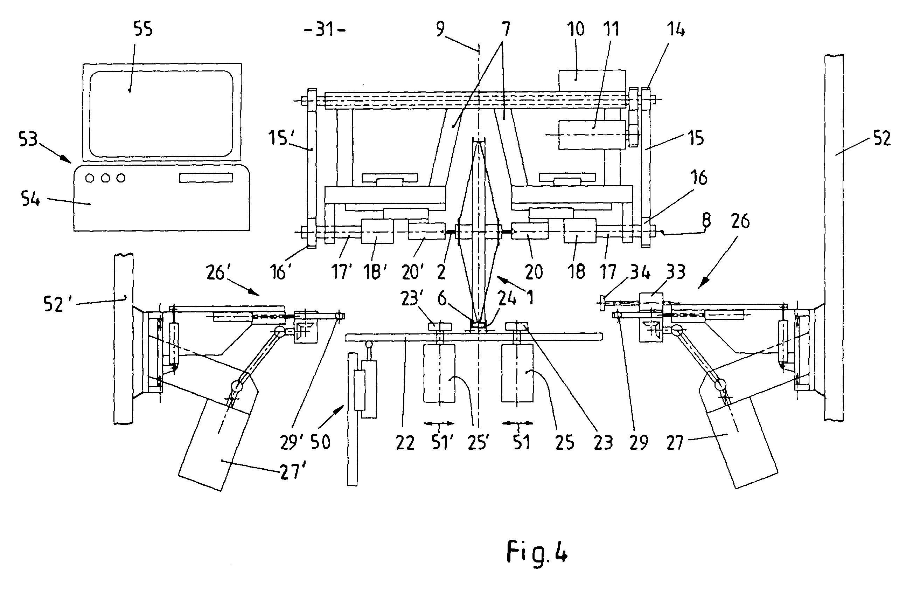

Fig. 4 zeigt noch einmal die wesentlichen Elemente der gesamten Zentriermaschine. Es ist der Arbeitstisch 22 unterhalb des Rahmens 7 erkennbar. Der Arbeitstisch 22 ist mit einer Höhenführung 50 versehen, so daß er über entsprechende Antriebsmittel in der Höhe verfahrbar und damit einstellbar ist. Die Antriebsrollen 23 und 23' mit ihren Motoren 25 und 25' werden damit ebenfalls in der Höhe verstellt. Sie sind in Richtung der Doppelpfeile 51 und 51' symmetrisch gegenläufig und gekoppelt zu der Idealebene 9 bewegbar. Es sind hier zwei Nippelspanner 26 und 26' vorgesehen, von denen je einer auf einer Seite der Idealebene 9 arbeitet. Die beiden Nippelspanner 26 und 26' sind gegenläufig symmetrisch zu der Vertikalebene 31 verstellbar, und zwar auf Lochabstand der Felge 6 bzw. auf den Abstand der Nippel. Hierzu ist der Nippelspanner 26 an einem Träger 52 aufgehängt, der wiederum um die Idealachse 8 verschwenkbar ist, so daß der Nippelspanner 26 bei einer Einstellung seiner verschiedenen Stellungen in Entfernung von der Idealachse 8 in gleicher Relativlage verbleibt. Er stellt sich also bei verschiedenen Laufradgrößen und bei verschiedenen Lochabständen der Felge in der betreffenden Ebene automatisch richtig ein. Ebenso ist der Nippelspanner 26' an einem Träger 52' aufgehängt. Die Einstellung der Nippelspanner 26 und 26' auf Lochabstand erfolgt gegenläufig zu der Vertikalebene 31.

Es ist eine gemeinsame elektronische Steuereinrichtung 53 mit Computer 54 und Bildschirm 55 vorgesehen. Der Computer 54 besitzt einen Speicher, in welchem die erforderlichen Daten für jeden Laufradtyp gespeichert sind. Die verschiedenen Elemente der Zentriermaschine werden so über die Steuereinrichtung 53 reproduzierbar eingestellt, und auch der entsprechende Arbeitsablauf ist dort gespeichert. Aus Übersichtlichkeitsgründen sind die verschiedenen Einstell- und Steuermittel nicht im einzelnen genau bezeichnet und angedeutet. Auch die Verbindungsleitungen sind aus Übersichtlichkeitsgründen weggelassen. An den Stellen der Zentriermaschine, an denen eine Grundeinstellung der Elemente auf den entsprechenden Laufradtyp erfolgt, können relativ langsame Mittel vorgesehen sein, beispielsweise Elektromotore, Schrittmotore, Getriebemotore o. dgl.. An anderen Stellen, an denen eine relativ schnelle Bewegung erforderlich ist, beispielsweise beim Absenken der Spannuß 29 des Nippelspanners 26 auf den betreffenden Nippel, werden vorzugsweise mit Luft betriebene Zylinder eingesetzt, um eine schnelle Bewegung zu erreichen.

### BEZUGSZEICHENLISTE

- 1: Laufrad
- 2: Achse
- 3: Nabe
- 4: Speiche
- 5: Speiche
- 6: Felge
- 7: Rahmen
- 8: Idealachse
- 9: Idealebene
- 10: Wegmeßeinrichtung
- 11: Motor
- 12: Treibriemen
- 13: Antriebswelle
- 14: Treibrad
- 15: Riemen
- 16: Treibrad
- 17: Gewindestange
- 18: Gewindemutter
- 19: Schlitten
- 20: Spanneinrichtung
- 21: Spannfutter
- 22: Arbeitstisch
- 23: Antriebsrolle
- 24: Einlaufschiene
- 25: Motor
- 26: Nippelspanner
- 27: Motor
- 28: Gelenkwelle
- 29: Spannuß
- 30: Drehachse
- 31: Vertikalebene
- 3: 2 Zylinder
- 33: Einrichtung
- 34: Fühler
- 35: Säule
- 36: Schlitten
- 37: Motor
- 38: Unterschiene
- 39: Zylinder
- 40: Schlitten
- 41: Umlenkrolle
- 42: Seil
- 43: Oberschiene
- 44: Anschlag
- 45: Anschlag
- 46: Einrichtung
- 47: Fühler
- 48: Zylinder
- 49: Anschlag
- 50: Höhenführung
- 51: Doppelpfeil
- 52: Träger
- 53: Steuereinrichtung
- 54: Computer
- 55: Bildschirm

## Patentansprüche

1. Zentriermaschine zu Nachspannen und Zentrieren von eingespeichten Laufrädern, mit Schienen (38, 24, 43) zur Führung des Laufrades, mit Anschlägen (44, 45) zum Positionieren der Achse (2) des Laufrades (1), mit je einer Spanneinrichtung (20, 20') rechts und links des Laufrades (1) zur Aufnahme der Achse (2) des Laufrades (1), mit an der Felge (6) angreifenden Antriebsrollen (23, 23') zum Drehen des Laufrades (1) um seine gespannte Achse (2), und mit mindestens einem reversibel angetriebenen Nippelspanner (26), **dadurch gekennzeichnet**, daß die beiden Spanneinrichtungen (20, 20') auf einem in Richtung einer Idealachse (8) verschieblich gelagerten Rahmen (7) angeordnet und auf diesem gemeinsamen Rahmen (7) symmetrisch zu einer Idealebene (9) senkrecht zu der Idealachse (8) in Richtung der Idealachse (8) gegenläufig verfahrbar sind, daß zur Ermittlung des Verschiebeweges des Rahmens (7) relativ zu der Idealebene eine Wegmeßeinrichtung (10) vorgesehen ist, und daß der Nippelspanner (26) radial zur Idealachse (8) verfahrbar und mit einer Einrichtung (33) zum Erkennen der Laufradseite ausgestattet ist.

2. Zentriermaschine nach Anspruch 1, **dadurch gekennzeichnet**, daß rechts und links des Laufrades (1) je ein Nippelspanner (26, 26') vorgesehen ist, die beide um die Idealachse (8) schwenkbar aufgehängt und gemeinsam gegenläufig relativ zu einer durch die Idealachse (8) festgelegten Vertikalebene (31) verfahrbar sind.

3. Zentriermaschine nach Anspruch 1 oder 2, **dadurch gekennzeichnet**, daß jeder Nippelspanner (26, 26') eine Spannuß (29, 29') mit frei schwenkbarer Drehachse (30) zum Ausgleich unterschiedlicher Schräglagen der Speichen (4, 5) zur Idealebene (9) aufweist.

4. Zentriermaschine nach einem der Ansprüche 1 bis 3, **dadurch gekennzeichnet**, daß für die Einstellung der Schienen zur Führung des Laufrades (1) und/oder der Anschläge (44, 45) zum Positionieren der Achse (2) des Laufrades (1) und/oder der an der Felge (6) angreifenden Antriebsrollen (23, 23') zum Drehen des Laufrades und/oder des oder der reversibel angetriebenen Nippelspanner (26, 26') jeweils elektrische, elektromechanische und/oder pneumatische Mittel vorgesehen sind, und daß eine gemeinsame elektronische Steuereinrichtung (53) für die Einstellung der genannten Elemente und deren Arbeitsablauf in Abhängigkeit von dem Typ und insbesondere der Größe des jeweiligen Laufrades vorgesehen ist.

5. Zentriermaschine nach einem der Ansprüche 1 bis 4, **dadurch gekennzeichnet**, daß ein höhenveränderlicher Arbeitstisch (22) vorgesehen ist, an dem eine untere Einlaufschiene (24) für das Laufrad höhenverstellbar endet und der die beiden Antriebsrollen (23, 23') für die Felge (6) des Laufrades (1) trägt.

6. Zentriermaschine nach Anspruch 5, **dadurch gekennzeichnet**, daß an dem Arbeitstisch (22) eine Einrichtung (46) zur Messung eines Höhenschlages des Laufrades (1) in Richtung auf die Idealachse (8) verfahrbar vorgesehen ist.

7. Zentriermaschine nach Anspruch 5, **dadurch gekennzeichnet**, daß die Einlaufschiene (24) einen ebenen Boden aufweist.

8. Zentriermaschine nach Anspruch 1 oder 4, **dadurch gekennzeichnet**, daß zwei Anschläge (44,45) zum Positionieren der Achse (2) des Laufrades (1) vorgesehen sind, die um etwa 90° versetzt zu der Idealachse (8) angeordnet und gemeinsam gleichläufig in ihrem Abstand von der Idealachse (8) verfahrbar sowie aus der Anschlagstellung in eine jeweilige Parkstellung und umgekehrt beweglich sind.

9. Zentriermaschine nach einem oder mehreren der Ansprüche 1 bis 8, **dadurch gekennzeichnet**, daß obere und untere Einlaufschienen (38, 24, 43) für das Laufrad (1) vorgesehen sind, die über einen Antrieb (37, 36, 40, 42) in der Höhe gegenläufig verstellbar sind.

10. Zentriermaschine nach Anspruch 1, **dadurch gekennzeichnet**, daß der gemeinsame Rahmen (7) für die Spanneinrichtungen (20, 20') eine sich parallel zu der Idealachse (8) erstreckende von einem Motor (11) getriebene Antriebswelle (13) aufweist, und daß die beiden Spanneinrichtungen (20, 20') über Gewindespindeln (17, 17') mit gegenläufigen Gewinden in Richtung der Idealachse (8) angetrieben sind.
